# EUROPÄISCHE PATENTSCHRIFT

(11) **EP 1 117 573 B1**
(45) Veröffentlichungstag und Bekanntmachung des Hinweises auf die Patenterteilung: **13.09.2006**
(21) Anmeldenummer: 00960318.4
(22) Anmeldetag: 25.07.2000
(51) Int. Cl.: B60S 1/34

(54) **ANTRIEB EINER WISCHERANLAGE**
DRIVE FOR A WIPER SYSTEM
COMMANDE D'ESSUIE-GLACE

(30) Priorität: 29.07.1999 DE 19935641
(43) Veröffentlichungstag der Anmeldung: 25.07.2001
(73) Patentinhaber: ROBERT BOSCH GMBH, 70442 Stuttgart (DE)
(72) Erfinder: KNAUF, Richard, F-67480 Roppenheim (FR)
(86) Internationale Anmeldenummer: PCT/DE2000/002424
(87) Internationale Veröffentlichungsnummer: WO 2001/008946

(56) Entgegenhaltungen:
- WO-A-96/11824
- DE-A- 19 517 017
- DE-A- 19 824 640

## Beschreibung

### Stand der Technik

Die Erfindung geht von einem Antrieb einer Wischeranlage nach dem Oberbegriff des Anspruchs 1 aus.

Wischeranlagen mit mehreren Scheibenwischern für Kraftfahrzeuge werden mit deren Wischerlagern direkt oder indirekt über eine Platine an der Fahrzeugkarosserie befestigt. Die Platine bzw. eine Rohrplatine - wenn der Wischerträger auch rohrförmige Hohlprofile enthält -, umfaßt eine Motorplatine, die einen Wischerantrieb mit einem Wischermotor und einem daran angebauten Getriebe trägt. Eine Abtriebswelle des Getriebes ist in einem Getriebedom gelagert und treibt in der Regel über eine Kurbel und Gelenkstangen weitere Kurbeln an, die mit einer Antriebswelle für jeden Scheibenwischer fest verbunden sind.

Ferner ist es möglich, daß die Abtriebswelle des Wischermotors ein Viergelenkhebelgetriebe antreibt. Dieses besitzt einen schwenkbaren Antriebshebel, der auf einer Antriebsachse sitzt und über ein Koppelelement gelenkig mit einem Lenkerhebel verbunden ist. Dieser sitzt auf einer ortsfesten Achse.

An dem Koppelelement ist ein Befestigungsteil eines Wischarms einstückig angeformt und bildet mit diesem einen sogenannten Viergelenkwischhebel, an dem über ein Abklappgelenk ein Gelenkteil des Wischarms befestigt ist. Der Antriebshebel kann direkt von einer Abtriebswelle des Wischermotors oder über eine Kurbel und Gelenkstangen angetrieben werden. Ferner kann er als Kreuzhebel ausgebildet sein. Die Kinematik des Viergelenkhebelgetriebes bewirkt eine kombinierte Hub-Schwenkbewegung des Scheibenwischers. Dadurch kann der Scheibenwischer besser der eckigen Kontur einer Windschutzscheibe folgen.

Der Wischbereich eines Scheibenwischer wird durch die Parkposition und die Umkehrlage begrenzt. In der Parkposition sollte der Scheibenwischer in der tiefsten Stellung zur Motorhaube in einer sogenannten Haubenspalte zwischen der Motorhaube und der Windschutzscheibe stehenbleiben. Von der Parkposition aus bewegt sich der Scheibenwischer nach oben und zur Fahrerseite bis in die Umkehrlage. Dabei sollte das Wischfeld des benachbarten Scheibenwischers nicht zu weit überwischt werden, damit die Sicht des Fahrers nicht unnötig behindert wird. Die Lagerspiele und Elastizitäten des Viergelenkhebelgetriebes ergeben wegen der unterschiedlichen Reibungseinflüsse und der Massenträgheitsmomente des Scheibenwischers größere Winkelabweichungen in der Parkposition und in der Umkehrlage, die dazu führen, daß der Scheibenwischer nicht immer die gewünschte Parkposition erreicht und in der Umkehrlage das Wischfeld des anderen Scheibenwischers mehr überwischt, als es für ein gutes Wischergebnis wünschenswert ist. In dieser Position behindert er außerdem das Sichtfeld des Fahrers. Erreicht er die windgeschützte Parkposition nicht, entstehen Windgeräusche, und der Wischarm liegt im Sichtfeld des Beifahrers bzw. des Fahrers.

Die Parkposition und die Umkehrlage sind gleichzeitig Wendepunkte für den Scheibenwischer. In diesen Stellungen wechselt die Antriebskraft ihre Richtung, was einen Anlagewechsel in den Lagerstellen bewirkt. Dieser Anlagewechsel verursacht Geräusche und führt zu einem unharmonischen Bewegungsablauf.

Aus der DE-A-195 17 017 ist ein Antrieb einer Wischeranlage mit einem Wischermotor bekannt, der über eine Kurbel und eine Gelenkstange ein viergelenkgetriebe antreibt, das ein Koppelelement umfasst, wobei ein vorgespanntes Federelement das viergelenkhebelgetriebe vorspannt. Dabei wirkt das Federelement derart auf ein Bauteil des Viergelenkhebelgetriebes, dass es die Antriebskräfte des Scheibenwischers aus einer Parkposition heraus unterstützt, sodass seine Vorspannung mit zunehmender Aufwärtsbewegung des Scheibenwischers abnimmt. In der Umkehrlage ist ein weiteres Federelement wirksam, dessen Kräfte entgegengesetzt gerichtet sind. Dadurch wird in einer Zwischenposition zwischen der Parkposition und der Umkehrlage ein Zustand erreicht, in dem keine Vorspannung wirksam ist.

Ferner ist aus der DE-A-198 24 640 ein ähnlicher Antrieb einer Wischeranlage bekannt. Das Federelement wirkt ebenfalls so auf ein Bauteil des viergelenkhebelgetriebes, dass es die Wendebewegung des Wischarms in der unteren und oberen Position unterstützt. Entsprechend wirkt das Federelement in der Parkposition in Richtung der Aufwärtsbewegung des Scheibenwischers, während es in der Umkehrlage in Richtung der Abwärtsbewegung wirkt. In einer Zwischenposition durchläuft das Federelement eine Nulllage, in der keine Kräfte auf das Viergelenkhebelgetriebe ausgeübt werden. Das Federelement kann eine auf Torsion beanspruchte Gummibuchse sein, die zwischen einer Gelenkachse und einem Hebel des Viergelenkhebelgetriebes angeordnet ist. Die Gummibuchse ist so in dem Gelenk eingebaut, dass sie in der Parkposition und in der Umkehrposition des Scheibenwischers in Richtung der Aufwärtsbewegung bzw. der Abwärtsbewegung des Scheibenwischers wirkt. In einer Zwischenposition zwischen der Parkposition und der Umkehrlage nimmt die Gummibuchse einen unverspannten Zustand ein, in welchem keine Verdrehelastizität vorliegt.

### Vorteile der Erfindung

Ein vorgespanntes Federelement spannt ein Hebelgetriebe einer Wischeranlage vor. Dieses Hebelgetriebe umfasst Gelenkstangen und ein Koppelelement. An diesem ist ein Befestigungsteil eines Wischarms angeformt oder befestigt. Die Vorspannung, die nach der Erfindung der Antriebskraft des Scheibenwischers während der Aufwärtsbewegung aus der Parkposition entgegenwirkt, sorgt für eine konstante Anlage in den Gelenken, sodass kein Anlagewechsel bei der Bewegungsumkehr stattfindet und sich Lagerspiele nicht auf die Haltepositionen in den Endlagen des Scheibenwischers auswirken. Diese Endlagen können daher bei der Montage präzise eingestellt werden.

Die Scheibenwischer erreichen somit in den Ruhephasen ihre unterste Parkposition am unteren Rand der Windschutzscheibe in der Haubenspalte zwischen der Motorhaube und der Windschutzscheibe. In dieser Position behindern sie weder die Sicht noch erzeugen sie störende Windgeräusche während der Fahrt. Das Federelement nach der Erfindung spannt das viergelenkhebelgetriebe vor und sorgt so dafür, dass die eingestellte Anlage erhalten bleibt, sodass sich auch ein Verschleiß in den Gelenken während der Lebensdauer nicht auswirkt. Dadurch kann zum einen eine tiefe Parkposition und zum anderen eine eindeutige Begrenzung des wischfelds zum benachbarten Wischfeld erreicht werden. Dabei wirkt die Vorspannung des Federelements zweckmäßigerweise in Richtung auf die Parkposition, sodass das Spiel in dieser Richtung vermieden wird. In der Umkehrlage zum benachbarten Wischfeld drückt das Federelement den Scheibenwischer gegen die Antriebskraft, sodass das eingestellte Wischfeld mit einem definierten Überdeckungsbereich sich nicht vergrößert.

Da in der Regel die Antriebskräfte bei der Aufwärtsbewegung kleiner sind als bei der Abwärtsbewegung, kann die Vorspannung dazu dienen, die Antriebskräfte bei der Aufwärtsbewegung den Antriebskräften bei der Abwärtsbewegung anzugleichen, indem sie diesen bei der Aufwärtsbewegung entgegenwirkt und sie bei der Abwärtsbewegung unterstützt. Dadurch können kleinere Wischermotoren mit einer weitgehend gleichmäßigen Antriebsleistung verwendet werden.

In der Parkposition ist ein zwischen dem Koppelelement und dem Lenker eingeschlossener Winkel am größten und verkleinert sich stetig bis zur Umkehrlage. Deshalb ist vorteilhafterweise eine Drehfeder in dem Viergelenkhebelgetriebe eingebaut, deren Schenkel auf das Koppelelement und den Lenker wirken mit der Tendenz, den Winkel zu vergrößern. Außerdem ist das Ausgleichen der nach erfolgter Montage vorhandenen Toleranzen durch den Einbau einer Drehfeder kostengünstig und beansprucht wenig Bauraum.

Zweckmäßigerweise liegt die Drehachse der Drehfeder koaxial zur gemeinsamen Gelenkachse des Koppelelements und des Lenkers und die Schenkel der Drehfeder greifen in eine Öse oder eine Bohrung des Koppelelements bzw. des Lenkers ein, sodass beide Teile ständig vorgespannt werden. Während der Aufwärtsbewegung des Scheibenwischers aus der Parkposition wirkt die Vorspannung der Drehfeder der Antriebskraft des Scheibenwischers entgegen. Die Drehfeder wird dabei weiter vorgespannt. Durch diese zusätzliche Gegenkraft wird der Scheibenwischer in der Umkehrlage stärker abgebremst. In der Folge wird die Überwischung zur Fahrerseite verringert und die Sicht des Fahrers verbessert. Der zwischen Lenker und Koppelelement eingeschlossene Winkel wird während der Aufwärtsbewegung verringert und ist in der Umkehrlage am kleinsten.

Durch die ständige Vorspannung des Viergelenkhebelgetriebes wird ein Anlagewechsel in den Wendepunkten vermieden, wodurch die Umlegegeräusche des Scheibenwischers verringert werden. Gleichzeitig ist der Bewegungsablauf des Hebelgetriebes harmonischer, der Verschleiß der Bauteile ist geringer und die Lebensdauer wird erhöht.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung einer Wischeranlage in der Parkposition,
- Fig. 2: eine perspektivische Darstellung eines Viergelenkhebelgetriebes im vergrößerten Maßstab und
- Fig. 3: eine perspektivische Darstellung einer Wischeranlage in der Umkehrlage.

### Beschreibung der Ausführungsbeispiele

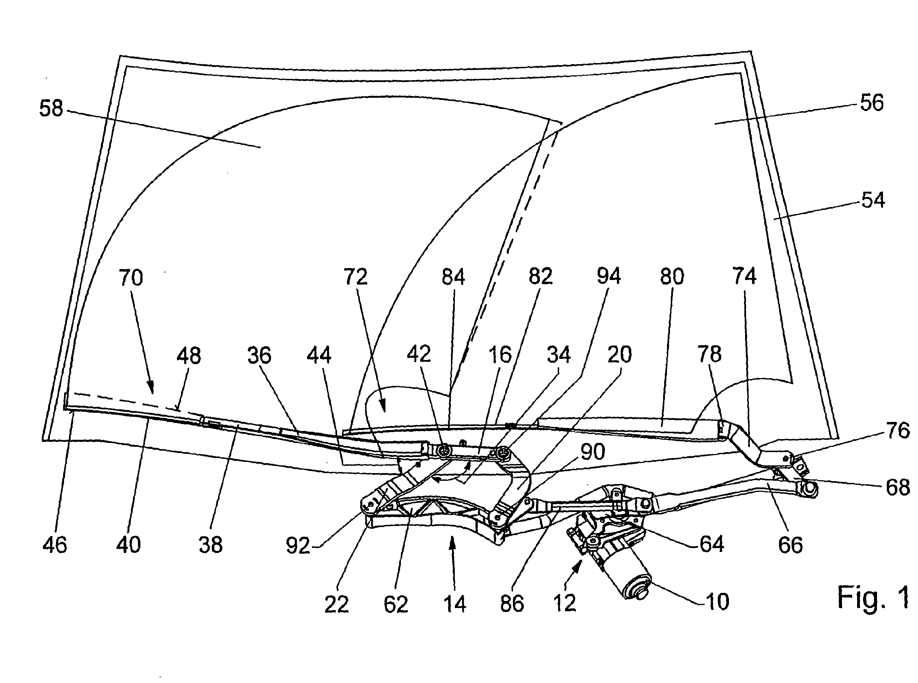

Der Antrieb einer Wischeranlage, bestehend aus einem Wischermotor 10 und einem daran angebauten Getriebe 12, treibt über eine Kurbel 64 und Hebelmechanismen zwei Scheibenwischer 70 bzw. 72 an (Fig. 1). Auf der Fahrerseite umfaßt der Hebelmechanismus eine gelenkig mit der Kurbel 64 verbundene Gelenkstange 66, die wiederum an ihrem anderem Ende gelenkig mit einer weiteren Kurbel 68 einer Antriebswelle 76 verbunden ist. Auf dieser sitzt am anderen Ende ein Befestigungsteil 74 des Scheibenwischers 72. An das Befestigungsteil 74 schließt sich über ein Abklappgelenk 78 ein Gelenkteil 80 an, das eine Wischstange 82 mit einem Wischblatt 84 hält. Bei der Schwenkbewegung des Befestigungsteils 74 überstreicht das Wischblatt 84 ein Wischfeld 56 auf der Windschutzscheibe 54.

Ein Wischfeld 58 des Scheibenwischers 70 auf der Beifahrerseite unterscheidet sich von dem der Fahrerseite dadurch, daß es eine eckigere Kontur aufweist und den Bereich in der oberen Ecke der Windschutzscheibe 54 mit überwischt. Um das Wischfeld 58 zu erhalten, muß der Scheibenwischer 70 eine Hub-Schwenkbewegung ausführen, die durch ein Viergelenkhebelgetriebe 14 erzeugt wird. Dieses umfaßt einen Antriebshebel 20, einen Lenker 22 und ein Koppelelement 16 mit einem angeformten Befestigungsteil 18.

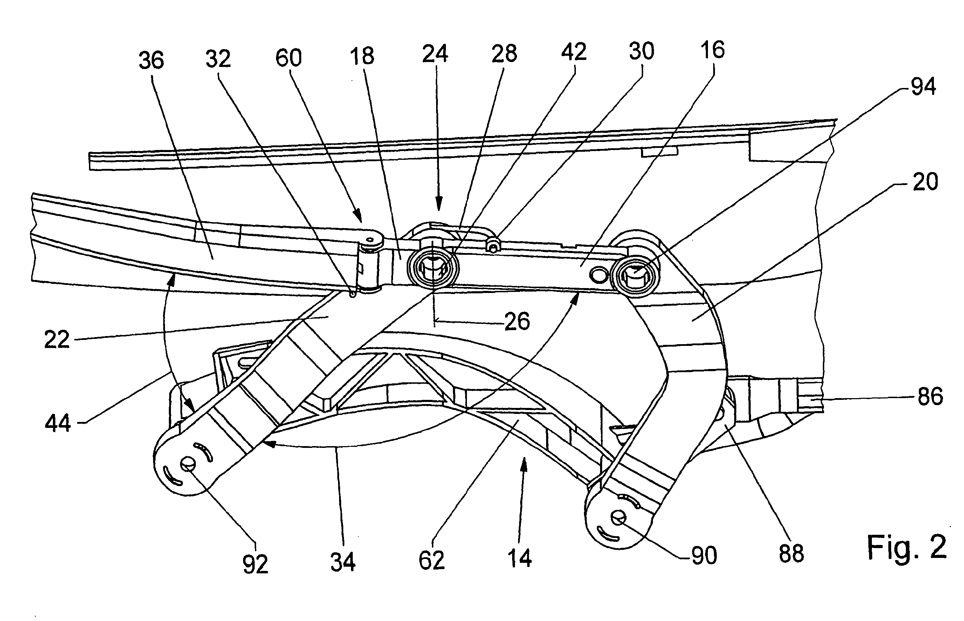

Der Antriebshebel 20 ist in der Lagerstelle 90 in einer Platine 62 gelagert, die an einer nicht dargestellten Fahrzeugkarosserie befestigt ist. Er wird von einer Kurbel 88 fest angetrieben. Eine Gelenkstange 86 verbindet die Kurbel 88 an dem Antriebshebel 20 mit der Kurbel 64 am Getriebe 12. Der Lenker 22 ist in einer Lagerstelle 92 der Platine 62 schwenkbar gelagert über ein Gelenk 42 mit dem Koppelelement 16 verbunden, der seinerseits über ein Gelenk 94 mit dem Antriebshebel 20 verbunden ist (Fig. 2).

Das Viergelenkhebelgetriebe 14 wird nach der Erfindung durch eine vorgespannte Drehfeder 24 vorgespannt. Die Drehfeder 24 ist zwischen dem Lenker 22 und dem Koppelelement 16 eingebaut. Dabei sind deren Schenkel 28 in einer Öse 30 des Koppelelements 16 bzw. in einer Bohrung 32 des Lenkers 22 befestigt. Die vorgespannte Drehfeder 24 spreizt in jeder Stellung das Koppelelement 16 und den Lenker 22, und zwar so, daß ein zwischen ihnen eingeschlossener Winkel 34 die Tendenz hat, sich zu vergrößern.

Die Verlängerung des Koppelelements 16 auf der anderen Seite des Gelenks 42 bildet das Befestigungsteil 18 des Scheibenwischers 70, an das sich das Gelenkteil 36 mit einem Abklappgelenk 60 und mit der Wischstange 38 sowie das Wischblatt 40 anschließen.

Zweckmäßigerweise liegt die Drehachse der Drehfeder 24 koaxial zur Gelenkachse 26 des Gelenks 42 zwischen dem Koppelelement 16 und dem Lenker 22. Bei der Bewegung des Koppelelements 16 aufwärts aus einer Parkposition 46 wird der Winkel 34 zwischen dem Lenker 22 und dem Koppelelement 16 verkleinert, wodurch die Vorspannung der Drehfeder 24 gleichzeitig steigt. In der Folge wird der sich an das Gelenk 42 anschließende Wischarm - bestehend aus dem Befestigungsteil 18, dem Gelenkteil 36 und der Wischstange 38 mit dem Wischblatt 40 - im Betätigungsfall beim Überstreichen des unteren Bereichs der Windschutzscheibe 54 immer in seine tiefste Position gebracht. Dies ist in der Ruhephase des Scheibenwischers 70 immer die tiefste Parkposition 46. Eine gestrichelte Haltelinie 48 kennzeichnet den Bereich, in dem der Scheibenwischer 70 ohne eingebaute Drehfeder 24 abgelegt werden könnte.

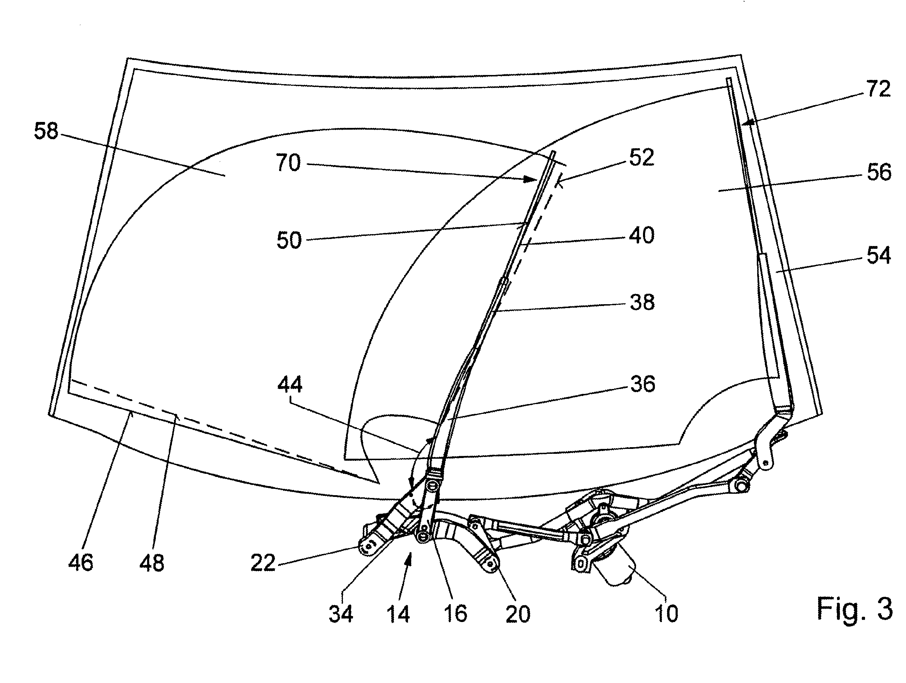

Der an dem Koppelelement 16 angelenkte Scheibenwischer 70 bewegt sich aus der Parkposition 46 zur Fahrerseite bis in die Umkehrlage 50 (Fig. 3). Dabei nimmt die Vorspannung zu. Infolgedessen bremst die Drehfeder 24 den Scheibenwischer 70 während der Aufwärtsbewegung stärker ab, so daß das Wischfeld 56 in der Umkehrlage 50 eine geringere Überdeckung mit dem Wischfeld 58 auf der Fahrerseite aufweist als ohne eingebaute Drehfeder 24. Eine Haltelinie 52 deutet eine Umkehrlage an, die ohne eingebaute Drehfeder 24 möglich wäre.

In dieser Stellung vergrößert die eingebaute Drehfeder 24 nach der oben beschriebenen Wirkungsweise den Winkel 34 um den Betrag der Lagerspiele in den Gelenken, was den Winkel 44 wiederum verkleinert. Demzufolge wird der Scheibenwischer 70 in die gewünschte Richtung gedrückt und das Wischfeld 58 am Rand zur Fahrerseite definiert.

### Bezugszeichen

- 10: Wischermotor
- 12: Getriebe
- 14: Viergelenkhebelgetriebe
- 16: Koppelelement
- 18: Befestigungsteil
- 20: Antriebshebel
- 22: Lenker
- 24: Drehfeder
- 26: Gelenkachse
- 28: Schenkel
- 30: Öse
- 32: Bohrung
- 34: Winkel
- 36: Gelenkteil
- 38: Wischstange
- 40: Wischblatt
- 42: Gelenk
- 44: Winkel
- 46: Parkposition
- 48: Haltelinie
- 50: Umkehrlage
- 52: Haltelinie
- 54: Windschutzscheibe
- 56: Wischfeld
- 58: Wischfeld
- 60: Abklappgelenk
- 62: Platine
- 64: Kurbel
- 66: Gelenkstange
- 68: Gelenkstange
- 70: Scheibenwischer
- 72: Scheibenwischer
- 74: Befestigungsteil
- 76: Antriebswelle
- 78: Abklappgelenk
- 80: Gelenkteil
- 82: Wischstange
- 84: Wischblatt
- 86: Gelenkstange
- 88: Kurbel
- 90: Lagerstelle
- 92: Lagerstelle
- 94: Gelenk

## Patentansprüche

1. Antrieb einer Wischeranlage mit einem wischermotor (10), der über eine Kurbel (64) und eine Gelenkstange (86) ein Viergelenkhebelgetriebe (14) antreibt, das ein Koppelelement (16) umfasst, wobei ein vorgespanntes Federelement (24) das Viergelenkhebelgetriebe (14) vorspannt, **dadurch gekennzeichnet, dass** die Vorspannung des Federelements (24) der Antriebskraft des Scheibenwischers (70) während der Aufwärtsbewegung aus der Parkposition (46) entgegenwirkt und während der Aufwärtsbewegung bis zur Umkehrlage (50) zunimmt, sodass der Scheibenwischer (70) in der Umkehrlage (50) stärker abgebremst wird.

2. Antrieb nach Anspruch 1, **dadurch gekennzeichnet, dass** das Federelement eine Drehfeder (24) ist, die in dem Viergelenkhebelgetriebe (14) zwischen dem Koppelelement (16) und einem Lenker (22) eingebaut ist.

3. Antrieb nach Anspruch 2, **dadurch gekennzeichnet, dass** die Drehachse der Drehfeder (24) koaxial zur gemeinsamen Gelenkachse (26) des Koppelelements (16) und des Lenkers (22) liegt und die Schenkel (28) der Drehfeder (24) jeweils auf den Lenker (22) und das Koppelelement (16) wirken.

4. Antrieb nach Anspruch 2 oder 3, **dadurch gekennzeichnet, dass** die Drehfeder (24) mit jeweils einem Schenkel (28) in eine Öse (30) oder eine Bohrung (32) des Koppelelements (16) bzw. des Lenkers (22) eingreift.

## Claims

1. Drive for a wiper system, with a wiper motor (10) which uses a crank (64) and an articulated rod (86) to drive a four-bar lever mechanism (14) which includes a coupling element (16), a prestressed spring element (24) prestressing the four-bar lever mechanism (14), **characterized in that** the prestressing of the spring element (24) opposes the driving force of the window wiper (70) during the upwards movement out of the parking position (46) and increases during the upwards movement as far as the reversal position (50), with the result that the window wiper (70) is braked more sharply in the reversal position (50).

2. Drive according to Claim 1, **characterized in that** the spring element is a torsion spring (24) which is fitted between the coupling element (16) and a link (22) in the four-bar lever mechanism (14).

3. Drive according to Claim 2, **characterized in that** the axis of rotation of the torsion spring (24) lies coaxially with the common axis of articulation (26) of the coupling element (16) and of the link (22), and the legs (28) of the torsion spring (24) act in each case on the link (22) and the coupling element (16).

4. Drive according to Claim 2 or 3, **characterized in that** the torsion spring (24) engages with one leg (28) in each case in an eyelet (30) or a hole (32) in the coupling element (16) or the link (22).

## Revendications

1. Commande d'installation d'essuie-glace comportant un moteur d'essuie-glace (10) entraînant par l'intermédiaire d'une manivelle (64) et d'une bielle (86), un quadrangle articulé (14) comportant un élément de couplage (16),
au moins un élément à ressort (24) précontraint assurant la précontrainte du quadrangle articulé (14),
**caractérisée en ce que**
la précontrainte de l'élément de ressort (24) s'oppose à la force d'entraînement de l'essuie-glace (70) pendant le mouvement de remontée à partir de la position de rangement (46) et cette précontrainte augmente pendant ce mouvement de remontée jusqu'au point d'inversion (50) pour que le balai d'essuie-glace (70) soit plus fortement freiné en position d'inversion (50).

2. Commande selon la revendication 1,
**caractérisée en ce que**
l'élément de ressort est un ressort de rotation (24) intégré au quadrangle articulé (14) entre l'élément de couplage (16) et un bras (22).

3. Commande selon la revendication 2,
**caractérisée en ce que**
l'axe de rotation du ressort rotatif (24) est coaxial à l'axe d'articulation commun (26) de l'élément de couplage (16) et du bras (22) et les branches (28) du ressort de rotation (24) agissent sur le bras (22) et l'élément de couplage (16).

4. Commande selon les revendications 2 ou 3,
**caractérisée en ce que**
le ressort de rotation (24) pénètre par une branche (28) respective dans un oeillet (30) ou un perçage (32) de l'élément de couplage (16) ou du bras (22).
